# EUROPÄISCHE PATENTSCHRIFT

(11) **EP 2 960 111 B1**
(45) Veröffentlichungstag und Bekanntmachung des Hinweises auf die Patenterteilung: **13.06.2018**
(21) Anmeldenummer: 15001076.7
(22) Anmeldetag: 15.04.2015
(51) Int. Cl.: B60Q 3/76, B60Q 3/80, B60Q 3/53

(54) **VERFAHREN ZUM BETREIBEN EINER BELEUCHTUNGSVORRICHTUNG EINES INNENRAUMS EINES KRAFTFAHRZEUGS UND ENTSPRECHENDE BELEUCHTUNGSVORRICHTUNG**
METHOD FOR OPERATING AN ILLUMINATION DEVICE OF A PASSENGER COMPARTMENT OF A MOTOR VEHICLE AND ASSOCIATED ILLUMINATION DEVICE
PROCÉDÉ DE FONCTIONNEMENT D'UN DISPOSITIF D'ÉCLAIRAGE D'UN HABITACLE D'UN VÉHICULE AUTOMOBILE ET DISPOSITIF D'ÉCLAIRAGE ASSOCIÉ

(30) Priorität: 27.06.2014 DE 102014009595
(43) Veröffentlichungstag der Anmeldung: 30.12.2015
(73) Patentinhaber: AUDI AG, 85045 Ingolstadt (DE)
(72) Erfinder: De Jong, Daniel, DE - 85049 Ingolstadt (DE)
(74) Vertreter: Thielmann, Frank

(56) Entgegenhaltungen:
- EP-A1- 2 390 139
- DE-A1- 10 061 039
- DE-A1-102005 031 637
- DE-A1-102006 052 777
- DE-A1-102012 015 039
- DE-U1- 29 822 554

## Beschreibung

Die Erfindung betrifft ein Verfahren zum Betreiben einer Beleuchtungsvorrichtung eines Kraftfahrzeugs, bei dem eine Position eines Körpers eines Benutzers des Kraftfahrzeugs in einem Innenraum des Kraftfahrzeugs ermittelt wird und eine Steuereinrichtung einen Betriebszustand der Beleuchtungsvorrichtung einstellt.

Derzeitige Fahrzeugbeleuchtungssysteme für den Innenraum bestehen derzeit aus einem oder mehreren Lichtspots, die meistens am Dachhimmel angebracht sind, oder die eine in eine Zierleiste des Kraftfahrzeugs angebrachte Ambientebeleuchtung umfassen. Die Beleuchtungsvorrichtung umfasst dabei Lichtquellen aus Einzelteilen, die an unterschiedlichen Orten eingesetzt werden. Das Licht lässt sich jedoch bisher nur bedingt einstellen.

Aus der US 7,118,239 B2 ist eine Vorrichtung mit einem Sonnendachpaneel bekannt, das aus mehreren Schichten eines transparenten Glases, einer transparenten Zwischenschicht und einer Mehrzahl elektrolumineszenter Folien aufgebaut ist. Die Beleuchtungsvorrichtung kann von einem Benutzer, also beispielsweise einem Fahrzeuginsassen, entweder an- oder ausgeschaltet werden.

Aus der DE 10 2012 214 108 A1 ist eine organische Beleuchtungsvorrichtung für ein Fahrzeug bekannt, die einen organischen Elektrolumineszenz-Touchabschnitt umfasst, welcher von einem Insassen zum Anschalten der Beleuchtungsvorrichtung berührt werden muss.

Die DE 100 61 039 A1 beschreibt ein Verfahren zum Sichtbarmachen von Bedienelementen eines Kraftfahrzeugs unter Verwendung von beleuchtbaren Bedienelementen. Eine Helligkeit der Beleuchtung kann dabei von einer Nähe eines Körperteils eines Insassen zu dem Bedienelement abhängen.

Ein weiteres Verfahren zum Beleuchten eines zu betrachtenden Objekts ist in der DE 10 2012 015 039 A1 beschrieben, wobei ebenfalls eine Sensoreinrichtung ein zu betrachtendes Objekt erfassen kann.

Werden Lichtspots als Lichtquelle in einer Beleuchtungsvorrichtung verwendet, so haben diese eine sehr beschränkte Leuchtfläche, sind jedoch hell. Ein Ambientelicht wird hauptsächlich nur als dekoratives Element zum Erzeugen einer vorbestimmten Stimmung benutzt. Im Stand der Technik ist das Licht jedoch stets an einen bestimmten Bewegungsrichtungsbereich gebunden und es kommt deshalb oft vor, dass ein Insasse dem Licht im Weg sitzt. Der Benutzer erzeugt somit einen Schatten, der meistens an einer Stelle erscheint oder er stört, oder es leuchtet nur dort, wo man kein Licht benötigt. Folglich muss ein Benutzer bisher in Kauf nehmen, dass ein Objekt, beispielsweise ein Buch oder ein Bedienelement des Kraftfahrzeugs, abgeschattet ist, oder er muss seine Körperhaltung an die Position des Lichtkegels anpassen.

Eine der Erfindung zugrundeliegende Aufgabe ist das Bereitstellen einer Beleuchtungsvorrichtung, die situations- oder benutzerabhängig eine optimale Ausleuchtung des Innenraums des Kraftfahrzeugs ermöglicht. Die Aufgabe wird von dem erfindungsgemäßen Verfahren zum Betreiben einer Beleuchtungsvorrichtung, der erfindungsgemäßen Beleuchtungsvorrichtung und dem erfindungsgemäßen Kraftfahrzeug gemäß den unabhängigen Patentansprüchen gelöst. Vorteilhafte Weiterbildungen der Erfindung sind durch die Unteransprüche gegeben.

Die Erfindung basiert auf der Idee, eine Beleuchtungsvorrichtung bereitzustellen, die dynamisch auf beispielsweise eine Körperbewegung oder eine Nutzungsabsicht des Benutzers reagiert. Hierzu wird mit einer Sensoreinrichtung des Kraftfahrzeugs eine Position des Körpers erfasst. Eine entsprechende Reaktion der Beleuchtungsvorrichtung wird in Abhängigkeit der Position des Körpers durch eine Steuereinrichtung ermittelt, die diese ansteuert und die Reaktion zur optimalen Ausleuchtung ausführt.

Durch das erfindungsgemäße Verfahren und die erfindungsgemäße Beleuchtungsvorrichtung sowie ein entsprechend ausgestattetes Kraftfahrzeug kann das optimale Ausleuchten in Echtzeit stattfinden und zudem ohne, dass es der Benutzer bemerkt.

Das erfindungsgemäße Verfahren dient entsprechend zum Betreiben einer Beleuchtungsvorrichtung eines Kraftfahrzeugs, also einer lichttechnischen Vorrichtung, vorzugsweise eine lichttechnische Vorrichtung zur Fahrzeuginnenbeleuchtung, die beispielsweise an einem Fahrzeugdach auf der Innenseite des Innenraums angeordnet sein kann. Eine Sensoreinrichtung, die vorzugsweise einen oder mehrere Sensoren, wie beispielsweise eine Kamera oder einen Ultraschallsensor, umfasst, ermittelt dabei eine Position des Körpers des Benutzers des Kraftfahrzeugs. Vorzugsweise ist die Sensoreinrichtung dabei in einem Innenraum des Kraftfahrzeugs angeordnet. Die Position des Körpers umfasst dabei beispielsweise eine Lage des Körpers, eine räumliche Körperposition oder eine Körperhaltung.

Die Sensoreinrichtung kann vorzugsweise eine berührungslose Sensoreinrichtung umfassen, also eine Einrichtung, die mindestens einen Sensor umfasst, der die Positionen des Körpers erfassen kann, ohne dass der Benutzer den mindestens einen Sensor berühren muss. Anhand der ermittelten Position des Körpers ermittelt eine Steuereinrichtung des Kraftfahrzeugs ein zu beleuchtendes Objekt und eine Position des Objekts innerhalb des Innenraum. Die Steuereinrichtung ist dabei eine Einrichtung, die eine Steuerelektronik umfasst, beispielsweise ein Mikrokontroller der Beleuchtungsvorrichtung oder ein Steuergerät des Kraftfahrzeugs. Das zu beleuchtende Objekt ist ein Objekt, das sich im Innenraum des Kraftfahrzeugs befindet und das gezielt von der Beleuchtungsvorrichtung beleuchtet werden soll. Es handelt sich dabei also um ein Zielobjekt. Das Objekt kann beispielsweise ein Buch umfassen, welches ein Benutzer im Innenraum lesen möchte, oder ein elektronisches Gerät, das der Benutzer benutzen möchte, also ein Nutzgegenstand des Benutzers.

Die Steuereinrichtung überprüft einen Beleuchtungszustand einer Oberfläche des Objekts, beispielsweise eine aufgeschlagene Seite eines Buchs. Der Überprüfungsvorgang umfasst ein Überprüfen, ob die Oberfläche des Objekts einen vorbestimmten Wert einer Beleuchtungsstärke aufweist.

Die Steuereinrichtung erzeugt ein Überprüfungssignal, vorzugsweise in Abhängigkeit eines Ergebnisses des Überprüfungsschrittes, welches signalisiert, ob und/oder inwieweit die Beleuchtungsstärke der Oberfläche den vorbestimmten Wert erreicht. Ein Signalisieren, ob die Beleuchtungsstärke der Oberfläche den vorbestimmten Wert erreicht, umfasst dabei eine qualitative Aussage, ob das Objekt beleuchtet ist oder nicht. Das Signalisieren, inwieweit die Beleuchtungsstärke der Oberfläche den vorbestimmten Wert erreicht, umfasst eine quantitative Aussage, die ein Abweichen oder eine Differenz des vorbestimmten Werts der Beleuchtungsstärke zu dem ermittelten tatsächlichen Wert der Beleuchtungsstärke, beispielweise um 5 Lux, angibt.

In Abhängigkeit von dem Überprüfungssignal erfolgt ein Einstellen eines Betriebszustandes der Beleuchtungsvorrichtung, in welchem die Oberfläche des Objekts durch Beaufschlagen mit Licht durch die Beleuchtungsvorrichtung die vorbestimmte Beleuchtungsstärke aufweist.

Das erfindungsgemäße Verfahren ermöglicht ein optimales Ausleuchten in einer Vielzahl von Situationen, da die Position des Körpers des Benutzers nicht als Folge einer Bedienhandlung des Benutzers ermittelt wird, sondern jede geänderte Position des Benutzers automatisch erfasst und ermittelt wird und ein Überprüfungsvorgang für jede Änderung der Körperposition erfolgen kann. Das erfindungsgemäße Verfahren ermöglicht ebenfalls eine Echtzeitanpassung der Beleuchtungsverhältnisse im Innenraum. Dies hat direkt zur Folge, dass die Anpassung der Beleuchtung dynamisch, also stufenlos, benutzerspezifisch und situationsabhängig erfolgt, und dass der Benutzer das Einstellen des Betriebszustandes der Beleuchtungsvorrichtung kaum wahrnimmt und so durch das Einstellen der Beleuchtungssituation nicht gestört wird. Dadurch, dass stets eine optimale Ausleuchtung des zu beleuchtenden Objekts erfolgt, kann das zu beleuchtende Objekt so beleuchtet werden, dass es nicht durch einen körpereigenen Schatten des Benutzers verdeckt wird.

Die Steuereinrichtung ist dazu ausgelegt, eine Körpersprache oder personenbezogene Bedürfnisse des Benutzers zu lernen, indem ein Vorbestimmen des Werts der Beleuchtungsstärke durch eine Bedienhandlung des Benutzers und/oder anhand des in der Steuereinrichtung gespeicherten benutzerspezifischen oder situationsabhängigen Profils erfolgt. Eine Bedienhandlung des Benutzers umfasst beispielsweise eine Bediengeste, beispielsweise ein Winken mit der Hand, oder eine Sprachsteuerung, bei der der Benutzer beispielsweise durch den Befehl "Ich mag kein blaues Licht" vorbestimmen kann, dass gemäß dem entsprechenden benutzerspezifischen Profil ein Einstellen der Beleuchtungsvorrichtung, das kein Einstellen einer blauen Lichtfarbe vorsieht.

Durch Identifizieren des Benutzers und/oder Erkennen eines Identifikationscodes des zu beleuchtenden Objekts erfolgt eine unbewusste Steuerung des Beleuchtungszustandes durch den Benutzer.

Gemäß einer bevorzugten Ausführungsform des erfindungsgemäßen Verfahrens kann durch das Ermitteln der Positionen des Körpers eine Nutzungsabsicht des Benutzers erkannt werden. Damit kann vorhergesehen werden, welche Intention der Benutzer hat und auf sein Vorhaben kann die Beleuchtungsvorrichtung schnell reagieren. Beispielsweise kann hier ein Drehen des Körpers und/oder ein Greifen nach der Türinnenbetätigung erfasst und ermittelt und so die Absicht, die Tür zu öffnen, erkannt werden.

Gemäß einer weiteren Ausführungsform des erfindungsgemäßen Verfahrenes umfasst das Überprüfen des Beleuchtungszustandes der Oberfläche des Objekts ein Ermitteln eines Ist-Werts der Beleuchtungsstärke, der beispielsweise durch eine Beleuchtungsstärkensensoreinrichtung erfasst wird, und ein Vergleichen des Ist-Werts mit einem beispielsweise in der Steuereinrichtung gespeicherten Soll-Wert der Beleuchtungsstärke. In Abhängigkeit von einem Unterschied des Ist-Werts zu dem Soll-Wert kann das Überprüfungssignal erzeugt werden. Dies ermöglicht das Einstellen einer Toleranzgrenze oder einer Reaktionsträgheit der Beleuchtungsvorrichtung. Die Beleuchtungsvorrichtung kann so den Beleuchtungszustand nach personenspezifischen Bedürfnissen einstellen.

Die Position des Körpers kann gemäß einer weiteren Ausführungsform des erfindungsgemäßen Verfahrens mit Hilfe einer Sensoreinrichtung ermittelt werden, die vorzugsweise ein Fahrerbeobachtungssystem, eine Kamera, eine Infrarotkamera, einen Pupillensensor, einen Näherungsschalter, einen Ultraschallsensor und/oder einen Drucksensor umfasst. Das Verwenden einer solchen beispielhaften Sensoreinrichtung ermöglicht eine besonders schnelle und zuverlässige Erfassung der Position des Körpers. Weiterhin kann ein bereits vorhandenes Kraftfahrzeugbauteil, das bereits im Innenraum des Kraftfahrzeugs vorhanden sind, genutzt werden, sodass ein nachträgliches Nachrüsten des Kraftfahrzeugs zumindest teilweise vermieden werden kann.

Mit Hilfe einer weiteren bevorzugten Ausführungsform des erfindungsgemäßen Verfahrens muss der Benutzer nicht unbedingt eine unbequeme Haltung einnehmen, um einen Schatten auf das zu beleuchtende Objekt zu vermeiden. Gemäß dieser Ausführungsform umfasst das Überprüfen des Beleuchtungszustandes der Oberfläche des Objekts ein Überprüfen dahingehend, ob der Körper des Benutzers wegen der ermittelten Position des Körpers und einer Position mindestens einer Lichtquelle der Beleuchtungsvorrichtung, beispielsweise einer punktförmigen Lichtquelle, relativ zu dem Körper des Benutzers die Oberfläche des Gegenstands ganz oder teilweise gegen die Lichtquelle abschirmt, abdunkelt oder abschattet.

Das Ermitteln des zu beleuchtenden Objekts kann gemäß einer weiteren Ausführungsform des erfindungsgemäßen Verfahrens ein Vorbestimmen des zu beleuchtenden Objekts umfassen. Durch beispielsweise Ermitteln einer Körpergeste oder Körperbewegung des Benutzers zum Vorbestimmen des zu beleuchtenden Objekts kann das zu beleuchtende Objekt anhand der Körpersprache des Benutzers, also aufgrund seiner Nutzungsabsicht, ermittelt werden. Durch ein alternatives oder zusätzliches Auswählen eines in der Steuereinrichtung gespeicherten benutzerspezifischen oder situationsabhängigen Profils wird ermöglicht, dass Vorlieben des Benutzers sowie personenspezifische Bedürfnisse berücksichtigt werden. Ein zusätzliches oder alternatives Erkennen einer Kontur und/oder eines Identifikationscodes des Objekts mithilfe der Sensoreinrichtung ermöglicht ein Ermitteln des zu beleuchtenden Objekts zum Vorbestimmen unabhängig von dem Benutzer, beispielsweise wenn ein Mobiltelefon von dem Beifahrersitz an einen Insassen auf der Rückbank weitergegeben wird, kann eine Beleuchtungssituation, die auf den Bereich des Beifahrers eingestellt war, für einen weiteren Benutzer auf der Rückbank eingestellt werden. Beispielsweise kann hierzu eine über eine drahtlose Kommunikationsverbindung übertragene Gerätenummer eines Mobiltelefons erkannt werden.

Eine Beleuchtungsvorrichtung, die wenig Lichtquellen erfordert und damit einen geringeren Stromverbrauch sowie eine unkompliziertere Elektronik benötigt, wird durch das Einstellen des Betriebszustandes der Beleuchtungsvorrichtung begünstigt, das ein Bewegen mindestens einer Lichtquelle, vorzugsweise mindestens einer punktförmigen Lichtquelle, der Beleuchtungsvorrichtung umfassen kann. In dieser bevorzugten Ausführungsform des erfindungsgemäßen Verfahrens kann beispielsweise eine Lichtquelle, oder ein Lichtquellensystem mit mehreren punktförmigen Lichtquellen, bei einem Einstellen des Betriebszustandes beispielsweise auf einer Schiene am Dachhimmel entlang in eine andere Position relativ zu dem Benutzer verfahren oder bewegt werden und/oder beispielsweise in einer der Positionen gekippt werden, sodass sich zum Beispiel der Einstrahlwinkel der Lichtquelle ändert.

Ein nahezu vollständiger Verzicht auf eine aufwendige Motorik in einer Beleuchtungsvorrichtung kann dagegen durch eine andere vorteilhafte Ausführungsform des erfindungsgemäßen Verfahrens erreicht werden, gemäß der ein Einstellen des Betriebszustandes der Beleuchtungsvorrichtung erfolgen kann, bei dem ein Ein- und/oder Ausschalten und/oder Dimmen der zumindest einen Lichtquelle der Beleuchtungsvorrichtung umfasst sein kann. Zusätzlich oder alternativ kann die zumindest eine Lichtquelle in ihrer Helligkeit verändert werden. Dies kann beispielsweise verwirklicht werden, indem beispielsweise verschiedene LEDs als Lichtquellen in einem beispielhaften LED-Himmel als Beleuchtungsvorrichtung in unterschiedlicher Art und Weise in ihrer Helligkeit eingestellt werden, also beispielsweise gedimmt werden. Alternativ kann beispielsweise eine Leuchtfläche als Lichtquelle partiell beleuchtet werden.

Das Einstellen des Betriebszustandes der Beleuchtungsvorrichtung kann gemäß eines bevorzugten Ausführungsbeispiels des erfindungsgemäßen Verfahrens das Einstellen einer Lichtstärke, einer Lichtfarbe, einer Leuchtdichte und/oder eines Einstrahlwinkels, der mindestens eine Lichtquelle umfassen. Dies ermöglicht eine fließende Änderung der Beleuchtungssituation, sodass der Insasse das Ändern der Beleuchtungssituation nicht mitbekommt und dadurch nicht gestört wird.

Die obige Aufgabe wird ebenfalls gelöst durch eine erfindungsgemäße Beleuchtungsvorrichtung eines Kraftfahrzeugs, vorzugsweise eines Kraftwagens, die eine Steuereinrichtung umfasst, die dazu ausgelegt ist, die eine Steuereinrichtung betreffenden Verfahrensschritte einer der oben beschriebenen Ausführungsformen des erfindungsgemäßen Verfahrens durchzuführen. Vorzugsweise kann die Beleuchtungsvorrichtung mindestens eine punktförmige Lichtquelle, zum Beispiel eine Glühbirne oder einen Lichtspot, eine Leseleuchte, ein Leuchtfeld, ein Lichtband, einen LED-Lichthimmel, einen Lichtleiter und/oder eine OLED-Folie umfassen. Hierdurch werden das Einstellen verschiedenartiger Atmosphären und ein fließender Übergang der Beleuchtungssituation ermöglicht.

Die oben gestellte Aufgabe wird ebenfalls gelöst durch ein Kraftfahrzeug, vorzugsweise einen Kraftwagen, der eine Sensoreinrichtung umfasst und durch eine erfindungsgemäße Beleuchtungsvorrichtung gekennzeichnet ist.

Die Erfindung wird anhand der beigefügten Zeichnungen noch einmal durch konkrete Ausführungsbeispiele näher erläutert. Die gezeigten Beispiele stellen bevorzugte Ausführungsformen der Erfindung dar. Funktionsgleiche Elemente weisen in den Figuren dieselben Bezugszeichen auf. Es zeigt:
- Fig. 1a: eine schematische Skizze zu einer Ausführungsform des erfindungsgemäßen Verfahrens in einer Seitenansicht,
- Fig. 1b: eine schematische Skizze zu der Ausführungsform des erfindungsgemäßen Verfahrens gemäß der Fig. 1a, jedoch in einer Aufsicht,
- Fig. 2a: eine schematische Skizze zu einer Ausführungsform des erfindungsgemäßen Verfahrens in einer Seitenansicht, und
- Fig. 2b: eine schematische Skizze zu der Fig. 2b, jedoch in Aufsicht.

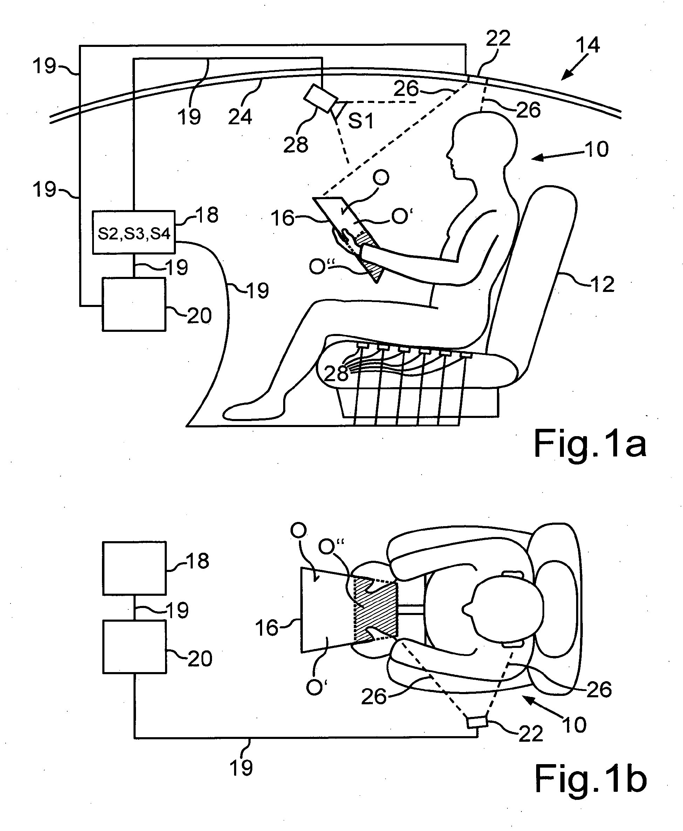

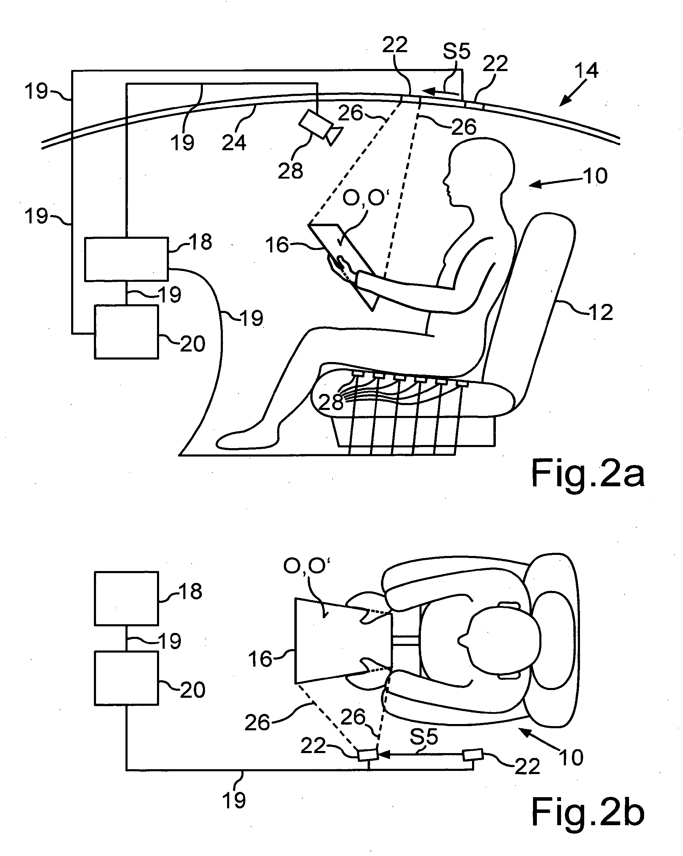

Die Fig. 1a, 1b, 2a und 2b veranschaulichen das Prinzip des erfindungsgemäßen Verfahrens gemäß einem bevorzugten Ausführungsbeispiel. Die Fig. 1a zeigt dazu einen Benutzer 10, in diesem Beispiel ein Fahrzeuginsasse auf dem Fahrzeugsitz 12 eines Kraftfahrzeugs 14, beispielsweise eines Personenkraftwagens. Der Benutzer 10 benutzt beispielsweise gerade ein zu beleuchtendes Objekt 16, beispielsweise ein Buch, ein mobiles Endgerät oder einen anderen Gebrauchsgegenstand. Alternativ kann das zu beleuchtende Objekt 16 auch einen Teil der Innenausstattung, beispielsweise ein Bedienelement wie ein Hebel zur Türinnenbetätigung, des Kraftfahrzeugs 14 umfassen, beispielsweise einen Türinnenbetätiger. Das Kraftfahrzeug 14 umfasst weiterhin eine Steuereinrichtung 18, beispielsweise einen Mikrokontroller oder ein Steuergerät, und eine Beleuchtungsvorrichtung 20.

Im vorliegenden Beispiel der Fig. 1a, 1b, 2a und 2b kann die Beleuchtungsvorrichtung 20 einen Mikrokontroller oder ein anderes Elektronikmodul umfassen, der mit einer Kommunikationsverbindung 19 mit der mindestens einen Lichtquelle 22 entweder drahtlos oder drahtgebunden verbunden ist. Die mindestens eine Lichtquelle 22 kann beispielsweise als punktförmige Lichtquelle, beispielsweise als Glühbirne oder Lichtspot, als Leuchtfeld, Lichtband, LED, Lichtleiter und/oder OLED-Folie ausgestaltet sein. Ein Beispiel für eine Beleuchtungsvorrichtung 20 mit mehreren Lichtquellen 22 ist beispielsweise ein LED-Lichthimmel. Im vorliegenden Beispiel kann die mindestens eine Lichtquelle 22 eine zehn Zentimeter breite Leseleuchte umfassen, die beispielsweise seitlich von dem Benutzer 10 an einem Innenausstattungsbauteil 24, hier im Beispiel einem Dachhimmel, angeordnet sein kann.

Die Fig. 1a zeigt in einer Seitenansicht die mindestens eine Lichtquelle 22 der Beleuchtungsvorrichtung 20 in einer vorbestimmten Position. Im gezeigten Beispiel ist die mindestens eine Lichtquelle 20 gerade angeschaltet und bewirkt in ihrer gegenwärtigen Position eine erste Beleuchtungssituation. Die gestrichelten Linien 26 können dabei einen beispielhaften Lichtkegel markieren, wie er zum Beispiel durch die beispielhafte Lichtquelle 22 erzeugt wird. In der Fig. 1 ist zu sehen, dass der Fahrer das zu beleuchtende Objekt 16 so hält, dass sein Kopf zum Beispiel eine untere Hälfte einer Oberfläche O des zu beleuchtenden Objekts 16 abschaltet oder abdunkelt. Der Benutzer 10 sitzt im Beispiel der Fig. 1a also so, dass beispielsweise ein Teilbereich O' der Oberfläche O des zu beleuchtenden Objekts 16 hell beleuchtet wird, während beispielsweise ein weiterer Anteil O" der Oberfläche O des zu beleuchtenden Objekts 16 deutlich geringer beleuchtet ist, also beispielsweise im Schatten liegt.

Die Fig. 1a zeigt weiterhin eine Sensoreinrichtung 28 des Kraftfahrzeugs 14, die beispielsweise ein Fahrerbeobachtungssystem, eine Kamera, eine Infrarotkamera, einen Pupillensensor, einen Näherungsschalter, einen Ultraschallsensor und/oder einen Drucksensor umfassen kann. Im Beispiel der Fig. 1a kann die Sensoreinrichtung 28 eine Kamera, die beispielsweise an dem Dachhimmel als Innenausstattungsbauteil 24 ausgestaltet ist, und/oder einen oder mehrere Drucksensoren in dem ersten Innenausstattungsbauteil 12, dem beispielhaften Fahrzeugsitz umfassen. Die Sensoreinrichtung 28 kann mit einer drahtlosen oder drahtgebundenen Kommunikationsverbindung 19 mit der Steuereinrichtung 18 verbunden sein. Im Verfahrensschritt S1 ermittelt die Sensoreinrichtung 28 eine Position des Körpers des Benutzers 10, das beispielsweise ein Erfassen einer räumlichen Körperposition, eine Augenposition, ein Blickwinkel und/oder eine Blickrichtung des Benutzers 10 umfasst. Vorzugseise kann dabei eine Körperposition ermittelt werden, die bevorzugt auch eine Körperhaltung oder eine Körpergestalt umfassen kann, das heißt die Sensoreinrichtung 28 kann beispielsweise eine Körpergröße, eine Körperkontur und/oder eine Körperhaltung des Benutzers 10 erfassen. Durch beispielsweise eine entsprechende Software der Sensoreinrichtung 28 kann daraus die Position des Körpers des Benutzers 10 ermittelt werden. Alternativ oder zusätzlich kann die Sensoreinrichtung 28 eine Körpergeste und damit eine Nutzungsabsicht eines zu beleuchtenden Objekts 16 erfassen und/oder ermitteln. Dies kann beispielsweise realisiert werden, indem die Sensoreinrichtung 28 dazu ausgelegt ist, mindestens eine Position des die Nutzungsabsicht oder Bedienhandlung ausführenden Körperteils des Benutzers in Bezug auf eine Abmessung des Innenraums des Kraftfahrzeugs 14, vorzugsweise zum Beispiel dreidimensionale Koordinaten einer Körpergeste in dem Innenraum, zu erfassen. Alternative kann beispielsweise ein Motion-Capture-Verfahren angewendet werden. Es handelt sich dabei um eine Bewegungserfassung oder Tracking-Verfahren, das es ermöglicht, eine Bewegung so zu erfassen und in ein von Computern lesbares Format umzuwandeln, dass die Sensoreinrichtung 28 und/oder die Steuereinrichtung 18 Bewegung analysieren, aufzeichnen, weiterverarbeiten und zur Steuerung von Anwendungen verwenden kann.

Die Sensoreinrichtung 28 kann dazu ein Signal erzeugen, das die Bedienhandlung, Nutzungsabsicht oder Körpergeste und/oder die Position des Körperteils im Innenraum beschreibt. Anhand des Signals der Sensoreinrichtung 28 und anhand mindestens einer Abmessung des Innenraums des Kraftfahrzeugs kann so beispielsweise eine zu bedienende Vorrichtung des Kraftfahrzeugs 14 erfasst und/oder ermittelt werden. Durch eine solche räumliche Zuordnung kann zum Beispiel eine Handbewegung zur Betätigung des Fensterhebers von der gleichen Handbewegung zur Betätigung des Schiebedachs unterschieden werden.

Vorzugsweise kann die Sensoreinrichtung 28 einen Ultraschallsensor umfassen, mit dessen Hilfe eine Distanzmessung über einen oder mehrere Messpunkte erfolgen kann, beispielsweise über drei oder vier Messpunkte, im Innenraum des Kraftfahrzeugs 14 erfasst werden kann. Damit kann zu jedem Zeitpunkt der Benutzung eine aktuelle Körperposition des Benutzers 10 erfasst und ermittelt werden.

Anhand der ermittelten Position des Körpers kann die Steuereinrichtung 18 ein Ermitteln des zu beleuchtenden Objekts 16 und dessen Position innerhalb des Innenraums des Kraftfahrzeugs 14 ermitteln (S2). Beispielsweise kann hierzu eine Software ein Ergebnis einer ermittelten Blickrichtung oder eines ermittelten Blickwinkels auswerten oder aber beispielsweise anhand der ermittelten Körperposition erkennen, ob und/oder was der Benutzer 10 beispielsweise etwas in der Hand hält. Alternativ kann beispielsweise die Steuereinrichtung 18 eine ermittelte Bedienhandlung oder Körpergeste auswerten und daraus eine Nutzungsabsicht, zum Beispiel ein beabsichtigtes Ergreifen eines Türinnenbetätigers, ermitteln.

Durch die Sensoreinrichtung 28 und/oder die Steuereinrichtung 18 kann das zu beleuchtende Objekt 16 mit Hilfe der Sensoreinrichtung 28 ermittelt werden, vorzugsweise durch Erkennen einer Kontur des Objekts 16 und/oder durch ein Erkennen eines Identifikationscodes des Objekts 16.

Die Steuereinrichtung 18 überprüft einen Beleuchtungszustand der Oberfläche O des Objekts 16. Dies kann beispielsweise durch Erfassen eines Werts einer Beleuchtungsstärke der Oberfläche erfolgen, zum Beispiel durch ein Luxmeter eines Beleuchtungsstärkensensors und durch Vergleichen der erfassten Beleuchtungsstärke mit einem Referenzwert. Eine solche beispielhafte Sensoreinrichtung 18 zum Erfassen einer Beleuchtungsstärke des zu beleuchtenden Objekts 16 kann beispielsweise an einer oder an verschiedenen Positionen in der Innenraumausstattung des Kraftfahrzeugs 14 angebracht sein. Alternativ kann beispielsweise, wenn das zu beleuchtende Objekt 16 beispielsweise ein mobiles Endgerät umfasst, das mobile Endgerät eine weitere Sensoreinrichtung 18 zum Erfassen der Beleuchtungsstärke umfassen. Weiterhin kann hierzu beispielsweise auch die gleiche Sensoreinrichtung 28, wie sie zum Erfassen der Position des Körpers verwendet wurde, beispielsweise als Kamera ausgestaltet, verwendet werden. Mit Hilfe beispielsweise eines entsprechenden Algorithmus erfolgt das Überprüfen des Beleuchtungszustandes der Oberfläche O des Objekts 16 durch Überprüfen, ob die Oberfläche O des Objekts 16 einen vorbestimmten Wert einer Beleuchtungsstärke aufweist.

In der Fig. 1b ist die Ausgangsbeleuchtungssituation der Fig. 1a in einer Aufsicht schematisch dargestellt. Zusätzlich zu dem bereits zu Fig. 1a erklärten beispielhaften Verfahren zeigt die Fig. 1b noch einmal deutlich den Beleuchtungszustand des zu beleuchtenden Objekts 16. In dem Überprüfungsschritt S3 kann beispielsweise festgestellt werden, dass die Oberfläche O des zu beleuchtenden Objekts 16 zwei unterschiedlich beleuchtete Bereiche O' und O" aufweist, bei denen einer der beiden Bereiche O' bei der aktuellen Körperposition des Benutzers 10 beispielsweise einem vorbestimmten Wert, das heißt beispielsweise bei einem in der Steuereinrichtung 18 gespeicherten Wert einer Beleuchtungsstärke von beispielsweise 50 Lux entspricht, während der weitere Bereich O" durch den Körper des Benutzers 10 abgeschattet ist und dadurch eine sehr viel geringere Beleuchtungsstärke aufweist, beispielsweise 30 Lux. Bei einem beispielhaften vorbestimmten Wert der Beleuchtungsstärke von 50 Lux liegt somit beispielsweise ein nicht ausreichend beleuchteter Teilbereich O" der Oberfläche O des zu beleuchtenden Objekts 16 vor.

Die Steuereinrichtung 18 erzeugt ein Überprüfungssignal (S4), welches im Beispiel der Fig. 1a und 1b beschreibt, dass eine vorbestimmte Beleuchtungsstärke von beispielsweise 55 Lux von der Oberfläche O zumindest teilweise nicht erreicht wird. Die Beleuchtungsstärke der abgeschatteten Oberfläche O" weist zu dem vorbestimmten Wert der Beleuchtungsstärke beispielsweise eine Differenz von 25 Lux auf. Ein in der Steuereinrichtung 18 gespeichertes benutzerspezifisches oder situationsabhängiges Profils wird aufgerufen. Der vorbestimmte Wert der Beleuchtungsstärke kann also beispielsweise vorprogrammiert sein oder während der Benutzung des Verfahrens von dem Benutzer 10 durch eine Bedienhandlung vorbestimmt werden, beispielsweise durch einen Sprachbefehl "Film schauen" oder "es ist mir zu hell", oder durch Bedienen eines Menüs eines Multi-Media-Interfaces.

Die Fig. 2a und die Fig. 2b zeigen das Einstellen des Betriebszustandes der Beleuchtungsvorrichtung 20 in Abhängigkeit von dem von der Steuereinrichtung 18 erzeugten Überprüfungssignal (S5). Dabei wird im Folgenden nur auf die Unterschiede zu der bisherigen Figurenbeschreibung eingegangen.

Das Überprüfungssignal kann von der Steuereinrichtung 18 an die Beleuchtungsvorrichtung 20 übertragen werden. In Abhängigkeit von dem Überprüfungssignal kann die Beleuchtungsvorrichtung 20 über eine drahtgebundene oder drahtlose Kommunikationsverbindung 19 den Betriebszustand einstellen (S5), also beispielsweise über die genannte Kommunikationsverbindung 19 die mindestens eine Lichtquelle 22, die beispielsweise von einem Motor angetrieben werden kann, auf einer beispielhaften Schiene am Dachhimmel von der Ausgangsposition in eine andere Position verfahren oder bewegt werden (S5, wobei die Bewegungsrichtung der mindestens einen Lichtquelle 22 in den Fig. 2a und 2b als Pfeil dargestellt ist). In der schematischen Seitenansicht der Fig. 2a ist zu sehen, dass der durch die Begrenzungen 26 gebildete Lichtkegel der mindestens einen Lichtquelle 22 nun die gesamte Oberfläche O des zu beleuchtenden Objekts 16 beleuchtet. Zusätzlich oder alternativ kann beispielsweise ein Einstellen einer Position der Lichtquelle 22, ein Einstellen einer Lichtstärke, einer Lichtfarbe, einer Leuchtdichte eines Leuchtfelds als Lichtquelle 22 und/oder ein Einstrahlwinkel der mindestens einen Lichtquelle 22 erfolgen. Das Einstellen des Betriebszustandes (S5) der Beleuchtungsvorrichtung 20 kann zusätzlich oder alternativ ein Ein- und/oder Ausschalten und/oder Dimmen der zumindest einen Lichtquelle 22 umfassen. Im Beispiel der Fig. 2a und 2b kann also beispielsweise zusätzlich das Licht der mindestens einen Lichtquelle 22 um 5 Lux erhöht werden.

In einem weiteren, nicht in den Figuren dargestellten Ausführungsbeispiel kann beispielsweise ein zu beleuchtendes Objekt 16 auf beispielsweise einem Fahrersitz erfasst und eine entsprechende mindestens eine Lichtquelle 22 so eingestellt werden, dass das zu beleuchtende Objekt 16 optimal auf einer Rückbank ausgeleuchtet ist, wenn beispielsweise das zu beleuchtende Objekt, während der Kraftwagen 14 sich in einem Stau befindet, nach hinten zu einer Person auf der Rückbank gegeben wird. Dadurch kann das Objekt 16 dynamisch in den Händen des Benutzers 10 auf der Rückbank ermittelt und der entsprechende Beleuchtungszustand für die Person 10 auf der Rückbank angepasst werden. Als Beispiel für ein situationsabhängiges Profil kann als Beispiel ein Profil verwendet werden, dass ein Benutzer 10 bei beispielsweise einem Antritt einer Geschäftsreise oder einer Reise mit Geschäftskollegen auf der Rückbank aufrufen könnte. Ein solches beispielhaftes Profil kann beispielsweise beschreiben, dass für die Plätze auf der Rückbank ein solcher vorbestimmter Wert einer Beleuchtungsstärke für das zu beleuchtende Objekt 16 gespeichert ist, der für eine optimale Lesesituation benötigt wird. Das entsprechende Kraftfahrzeug 14 erhöht folglich den Fahrkomfort und stellt dem jeweiligen Benutzer 10 eine situationsabhängige oder personenbezogene, optimale Beleuchtungssituation zur Verfügung.

Die oben angeführten Ausführungsbeispiele veranschaulichen das Prinzip des erfindungsgemäßen Verfahrens und der erfindungsgemäßen Beleuchtungsvorrichtung 20, mit Hilfe einer Sensoreinrichtung 28 und einer Steuereinrichtung 18 beispielsweise zu erkennen, wo ein Körper des Benutzers 10 sich gerade befindet, und die für einen Moment optimale Ausleuchtung zu ermitteln, beispielsweise zu berechnen. Dies findet in Echtzeit statt und vorzugsweise so, ohne dass der Benutzer 10 es bemerkt. Das Licht oder beispielsweise die Lichtstärke, das man beispielsweise zum Lesen oder Schreiben braucht, ist ein anderes als das, was man beispielsweise beim Filmschauen oder beim Ausruhen oder Rausschauen erwarten würde.

Über ein Erkennen von Bewegungen hinaus kann beispielsweise eine Intention von dem Benutzer 10 vorhergesehen werden. Wenn beispielsweise jemand mit seiner Hand zur Türinnenbetätigung greift und das Fahrzeug 14 steht, wäre eine logische Folge beispielsweise, dass der Benutzer 10 die Tür aufmachen möchte. In diesem Fall kann mit Hilfe des erfindungsgemäßen Verfahrens der beispielhafte Türinnenbetätiger als zu beleuchtendes Objekt 16 angeleuchtet und/oder akzentuiert werden.

Dies kann beispielsweise funktionieren, indem beispielsweise eine Gestikerkennung die Bewegung und Position des Benutzers 10 (beispielsweise Hände, Arme, Körperhaltung) erfassen kann. Danach kann eine entsprechende Gegenreaktion ermittelt, zum Beispiel ausgerechnet, werden, und die Beleuchtungsvorrichtung 20 von dem System, also von der Steuereinrichtung 18, angesteuert und ausgeführt werden. Dies könnte beispielsweise mit Hilfe eines Menüs einer Software eines Infotainmentsystems gesteuert werden, um die gewünschte Systemreaktion hervorzurufen. Wie beispielsweise bei einer "Drive Select"-Funktion lässt sich so der Charakter des Systems steuern, ob es beispielsweise sehr aktiv reagieren oder eher im Hintergrund stehen soll.

Es ergeben sich unter anderem die Vorteile einer absolut optimalen Ausleuchtung in jeder Situation, das Vermindern von Schatten und das Beleuchten eines Objekts 16, wo man es braucht und/oder erwartet.

## Patentansprüche

1. Verfahren zum Betreiben einer Beleuchtungsvorrichtung (20) eines Kraftfahrzeugs (14),
umfassend die Schritte:
- Ermitteln einer Position eines Körpers eines Benutzers (10) des Kraftfahrzeugs (14) durch eine Sensoreinrichtung (28) des Kraftfahrzeugs (14),
und durch eine Steuereinrichtung (18) des Kraftfahrzeugs (14):
- anhand der ermittelten Position des Körpers Ermitteln eines zu beleuchtenden Objekts (16) und einer Position des zu beleuchtenden Objekts (16) innerhalb eines Innenraums des Kraftfahrzeugs (14), **gekennzeichnet durch** die durch die Steuereinrichtung (18) durchgeführten Schritte:
- Überprüfen eines Beleuchtungszustandes einer Oberfläche (O) des Objekts (16) durch Überprüfen, ob die Oberfläche des Objekts (16) einen vorbestimmten Wert einer Beleuchtungsstärke aufweist,
- Erzeugen eines Überprüfungssignals, welches signalisiert, ob und/oder inwieweit die Beleuchtungsstärke der Oberfläche (O) den vorbestimmten Wert erreicht,
- in Abhängigkeit von dem Überprüfungssignal Einstellen eines Betriebszustandes der Beleuchtungsvorrichtung (20), in welchem die Oberfläche (O) des Objekts (16) durch Beaufschlagen mit Licht durch die Beleuchtungsvorrichtung (20) die vorbestimmte Beleuchtungsstärke aufweist,
- Vorbestimmen des Werts der Beleuchtungsstärke durch eine Bedienhandlung des Benutzers (10) und/oder anhand des in der Steuereinrichtung (18) gespeicherten benutzerspezifischen oder situationsabhängigen Profils, und
- Ermitteln des in der Steuereinrichtung (18) gespeicherten benutzerspezifischen oder situationsabhängigen Profils durch Identifizieren des Benutzers (10) und/oder Erkennen eines Identifikationscodes des Objekts (16).

2. Verfahren nach Anspruch 1,
**dadurch gekennzeichnet, dass**
durch das Ermitteln der Position des Körpers eine Nutzungsabsicht des Benutzers (10) erkannt wird.

3. Verfahren nach einem der vorhergehenden Ansprüche,
**dadurch gekennzeichnet, dass**
das Überprüfen des Beleuchtungszustandes der Oberfläche (O) des Objekts (16) ein Ermitteln eines Istwerts der Beleuchtungsstärke und ein Vergleichen des Istwerts mit einem Sollwert der Beleuchtungsstärke umfasst, und in Abhängigkeit von einem Unterschied des Istwerts zu dem Sollwert das Überprüfungssignal erzeugt wird.

4. Verfahren nach einem der vorhergehenden Ansprüche,
**dadurch gekennzeichnet, dass**
die Position des Körpers mithilfe einer Sensoreinrichtung (20), die ein Fahrerbeobachtungssystem, eine Kamera, eine Infrarotkamera, einen Pupillensensor, einen Näherungsschalter, einen Ultraschallsensor und/oder einen Drucksensor umfasst, ermittelt wird.

5. Verfahren nach einem der vorhergehenden Ansprüche,
**dadurch gekennzeichnet, dass**
das Überprüfen des Beleuchtungszustandes der Oberfläche (O) des Objekts (16) ein Überprüfen dahingehend umfasst, ob der Körper des Benutzers (10) wegen der ermittelten Position des Körpers und einer Position mindestens einer Lichtquelle (22) der Beleuchtungsvorrichtung (20) relativ zu dem Körper des Benutzers (10) die Oberfläche (O) des Objekts (16) ganz oder teilweise gegen die mindestens eine Lichtquelle (22) abschirmt.

6. Verfahren nach einem der vorhergehenden Ansprüche,
**dadurch gekennzeichnet, dass** das Ermitteln des zu beleuchtenden Objekts (16) umfasst:
Vorbestimmen des zu beleuchtenden Objekts (16) durch
- Ermitteln einer Körpergeste oder Körperbewegung des Benutzers (10),
- Auswählen eines in der Steuereinrichtung (18) gespeicherten benutzerspezifischen oder situationsabhängigen Profils, und/oder
- Ermitteln des zu beleuchtenden Objekts (16) mithilfe der Sensoreinrichtung (28), vorzugsweise durch Erkennen einer Kontur des Objekts (16) und/oder durch ein Erkennen eines Identifikationscodes des Objekts (16).

7. Verfahren nach einem der vorhergehenden Ansprüche,
**dadurch gekennzeichnet, dass**
- das Einstellen des Betriebszustandes der Beleuchtungsvorrichtung (20) ein Bewegen mindestens einer Lichtquelle (22) der Beleuchtungsvorrichtung (20), vorzugsweise mindestens eine punktförmige Lichtquelle (22) der Beleuchtungsvorrichtung (20), umfasst.

8. Verfahren nach einem der vorhergehenden Ansprüche,
**dadurch gekennzeichnet, dass**
- das Einstellen des Betriebszustandes der Beleuchtungsvorrichtung (20) ein Ein- und/oder Ausschalten und/oder Dimmen der zumindest einen Lichtquelle (22) der Beleuchtungsvorrichtung (20) umfasst.

9. Verfahren nach einem der vorhergehenden Ansprüche,
**dadurch gekennzeichnet, dass**
- das Einstellen des Betriebszustandes der Beleuchtungsvorrichtung (20) ein Einstellen einer Lichtstärke, einer Lichtfarbe, einer Leuchtdichte und/oder eines Einstrahlwinkels der mindestens Lichtquelle (22) umfasst.

10. Beleuchtungsvorrichtung (20) eines Kraftfahrzeugs (14), **gekennzeichnet durch** eine Steuereinrichtung (18), die dazu ausgelegt ist, die eine Steuereinrichtung (18) betreffenden Verfahrensschritte in einem Verfahren gemäß einem der Ansprüche 1 bis 9 durchzuführen.

11. Beleuchtungsvorrichtung (20) gemäß Anspruch 10, umfassend mindestens eine punktförmige Lichtquelle (22), eine Leseleuchte, ein Leuchtfeld, ein Lichtband, einen LED-Lichthimmel, einen Lichtleiter und/oder eine OLED-Folie.

12. Kraftfahrzeug (14), umfassend eine Sensoreinrichtung (28), **gekennzeichnet durch** eine Beleuchtungsvorrichtung (20) gemäß einem der Ansprüche 10 oder 11.

## Claims

1. Method for operating an illumination device (20) of a motor vehicle (14), comprising the steps of:
- establishing a position of a body of a user (10) of the motor vehicle (14) by means of a sensor device (28) of the motor vehicle (14),
and by means of a control device (18) of the motor vehicle (14):
- using the established position of the body, establishing an object (16) to be illuminated and a position of the object (16) to be illuminated within an inner space of the motor vehicle (14),
**characterised by** the steps carried out by the control device (18):
- verifying an illumination state of a surface (O) of the object (16) by verifying whether the surface of the object (16) has a predetermined value of an illumination intensity,
- producing a verification signal which signals whether and/or to what extent the illumination intensity of the surface (O) reaches the predetermined value,
- depending on the verification signal, adjusting an operating state of the illumination device (20) in which the surface (O) of the object (16) has the predetermined illumination intensity by being acted on with light by the illumination device (20),
- predetermining the value of the illumination intensity by means of an operational action of the user (10) and/or with reference to the user-specific or situation-dependent profile stored in the control device (18), and
- establishing the user-specific or situation-dependent profile stored in the control device (18) by identifying the user (10) and/or identifying an identification code of the object (16).

2. Method according to claim 1,
**characterised in that**
an intended use of the user (10) is identified by establishing the position of the body.

3. Method according to either of the preceding claims,
**characterised in that**
the verification of the illumination state of the surface (O) of the object (16) involves establishing an actual value of the illumination intensity and comparing the actual value with a desired value of the illumination intensity and the verification signal is produced depending on a difference of the actual value from the desired value.

4. Method according to any one of the preceding claims,
**characterised in that**
the position of the body is established using a sensor device (20) which comprises a driver monitoring system, a camera, an infrared camera, a pupil sensor, a proximity switch, an ultrasound sensor and/or a pressure sensor.

5. Method according to any one of the preceding claims,
**characterised in that**
the verification of the illumination state of the surface (O) of the object (16) involves a verification of whether the body of the user (10) as a result of the established position of the body and a position of at least one light source (22) of the illumination device (20) relative to the body of the user (10) shields the surface (O) of the object (16) completely or partially against the at least one light source (22).

6. Method according to any one of the preceding claims,
**characterised in that** the establishment of the object (16) to be illuminated involves:
predetermining the object (16) to be illuminated by
- establishing a body gesture or body movement of the user (10),
- selecting a user-specific or situation-dependent profile which is stored in the control device (18) and/or
- establishing the object (16) to be illuminated using the sensor device (28), preferably by identifying a contour of the object (16) and/or by identifying an identification code of the object (16).

7. Method according to any one of the preceding claims,
**characterised in that**
- the adjustment of the operating state of the illumination device (20) involves a movement of at least one light source (22) of the illumination device (20), preferably at least one point-like light source (22) of the illumination device (10).

8. Method according to any one of the preceding claims,
**characterised in that**
- the adjustment of the operating state of the illumination device (20) involves switching on and/or switching off and/or dimming the at least one light source (22) of the illumination device (20).

9. Method according to any one of the preceding claims,
**characterised in that**
- the adjustment of the operating state of the illumination device (20) involves an adjustment of a light intensity, a light colour, a light density and/or an incident angle of the at least one light source (22).

10. Illumination device (20) of a motor vehicle (14), **characterised by** a control device (18) which is configured to carry out the method steps relating to a control device (18) in a method according to any one of claims 1 to 9.

11. Illumination device (20) according to claim 10, comprising at least one point-like light source (22), a reading light, a light field, a light strip, an LED ceiling light, a light conductor and/or an OLED film.

12. Motor vehicle (14) comprising a sensor device (28),
**characterised by** an illumination device (20) according to either claim 10 or claim 11.

## Revendications

1. Procédé de fonctionnement d'un dispositif d'éclairage (20) d'un véhicule automobile (14),
comprenant les étapes :
- déterminer une position d'un corps d'un utilisateur (10) du véhicule automobile (14) au moyen d'un dispositif capteur (28) du véhicule automobile (14),
et, au moyen d'un dispositif de commande (18) du véhicule automobile (14) :
- à l'aide de la position déterminée du corps, déterminer un objet à éclairer (16) et une position de l'objet à éclairer (16) à l'intérieur d'un habitacle du véhicule automobile (14),
**caractérisé par** les étapes mises en oeuvre par le dispositif de commande (18) :
- vérifier un état d'éclairage d'une surface (O) de l'objet (16) en vérifiant si la surface de l'objet (16) a une valeur prédéterminée d'une intensité d'éclairage,
- produire un signal de vérification qui signale si et/ou dans quelle mesure l'intensité d'éclairage de la surface (O) atteint la valeur prédéterminée,
- en fonction du signal de vérification, régler un état de fonctionnement du dispositif d'éclairage (20), état dans lequel la surface (O) de l'objet (16) présente, grâce à la lumière appliquée par le dispositif d'éclairage (20), l'intensité d'éclairage prédéterminée,
- prédéterminer la valeur de l'intensité d'éclairage par une opération de commande de l'utilisateur (10) et/ou à l'aide du profil spécifique à l'utilisateur ou dépendant de la situation et mémorisé dans le dispositif de commande (18), et
- déterminer le profil spécifique à l'utilisateur ou dépendant de la situation et mémorisé dans le dispositif de commande (18) en identifiant l'utilisateur (10) et/ou en reconnaissant un code d'identification de l'objet (16).

2. Procédé selon la revendication 1,
**caractérisé en ce que**,
en déterminant la position du corps, on reconnaît une intention d'utilisation de l'utilisateur (10).

3. Procédé selon l'une quelconque des revendications précédentes,
**caractérisé en ce que**
la vérification de l'état d'éclairage de la surface (O) de l'objet (16) comprend une détermination d'une valeur réelle de l'intensité d'éclairage et une comparaison de la valeur réelle avec une valeur théorique de l'intensité d'éclairage et **en ce que** le signal de vérification est produit en fonction d'une différence entre la valeur réelle et la valeur théorique.

4. Procédé selon l'une quelconque des revendications précédentes,
**caractérisé en ce que**
la position du corps est déterminée à l'aide d'un dispositif capteur (20) qui comprend un système d'observation du conducteur, une caméra, une caméra infrarouge, un capteur de pupilles, un interrupteur détecteur de proximité, un capteur d'ultrasons et/ou un capteur de pression.

5. Procédé selon l'une quelconque des revendications précédentes,
**caractérisé en ce que**
la vérification de l'état d'éclairage de la surface (O) de l'objet (16) comprend une vérification pour savoir si, à cause de la position déterminée du corps et d'une position d'au moins une source de lumière (22) du dispositif d'éclairage (20) par rapport au corps de l'utilisateur (10), le corps de l'utilisateur (10) fait totalement ou partiellement écran entre l'au moins une source de lumière (22) et la surface (O) de l'objet (16).

6. Procédé selon l'une quelconque des revendications précédentes,
**caractérisé en ce que**
la détermination de l'objet à éclairer (16) comprend :
la prédétermination de l'objet à éclairer (16) en
- déterminant un geste corporel ou un mouvement corporel de l'utilisateur (10),
- sélectionnant un profil spécifique à l'utilisateur ou dépendant de la situation et mémorisé dans le dispositif de commande (18), et/ou
- déterminant l'objet à éclairer (16) à l'aide du dispositif capteur (28), de préférence par reconnaissance d'un contour de l'objet (16) et/ou par une reconnaissance d'un code d'identification de l'objet (16).

7. Procédé selon l'une quelconque des revendications précédentes,
**caractérisé en ce que**
- le réglage de l'état de fonctionnement du dispositif d'éclairage (20) comprend un mouvement d'au moins une source de lumière (22) du dispositif d'éclairage (20), de préférence d'au moins une source de lumière (22) ponctuelle du dispositif d'éclairage (20).

8. Procédé selon l'une quelconque des revendications précédentes,
**caractérisé en ce que**
- le réglage de l'état de fonctionnement du dispositif d'éclairage (20) comprend un allumage et/ou une extinction et/ou une variation d'intensité de l'au moins une source de lumière (22) du dispositif d'éclairage (20).

9. Procédé selon l'une quelconque des revendications précédentes,
**caractérisé en ce que**
- le réglage de l'état de fonctionnement du dispositif d'éclairage (20) comprend un réglage d'une intensité de lumière, d'une température de lumière, d'une luminance et/ou d'un angle d'incidence de l'au moins une source de lumière (22).

10. Dispositif d'éclairage (20) d'un véhicule automobile (14), **caractérisé par** un dispositif de commande (18) qui est conçu pour mettre en oeuvre des étapes de procédé concernant un dispositif de commande (18) dans un procédé selon l'une quelconque des revendications 1 à 9.

11. Dispositif d'éclairage (20) selon la revendication 10, comprenant au moins une source de lumière (22) ponctuelle, une lampe de lecture, un champ d'éclairage, un ruban lumineux, un plafond lumineux à LED, un guide de lumière et/ou une feuille OLED.

12. Véhicule automobile (14), comprenant un dispositif capteur (28), **caractérisé par** un dispositif d'éclairage (20) selon l'une quelconque des revendications 10 ou 11.
